# EUROPEAN PATENT APPLICATION

(11) **EP 4 496 156 A1**
(43) Date of publication of application: **22.01.2025**
(21) Application number: 23769796.6
(22) Date of filing: 14.03.2023
(51) Int. Cl.: H01R 31/06, H01R 13/73, H01R 13/621, H01B 7/40, H01B 7/18, H01B 7/17, B60L 53/16, B60L 53/18

(54) **MULTI-CORE ELECTRIC CONNECTOR ASSEMBLY AND VEHICLE**

(30) Priority: 14.03.2022 CN 202210250053
(71) Applicant: Jilin Zhong Ying High Technology Co., Ltd., Jilin 130028 (CN)
(72) Inventor: WANG, Chao, Changchun, Jilin 130028 (CN)
(74) Representative: Dehns
(86) International application number: PCT/CN2023/081407
(87) International publication number: WO 2023/174294

(57) **Abstract**

The present disclosure discloses a multi-core electric connector assembly, including at least two electric connection skeletons (1) and connectors (2) arranged at two ends of the electric connection skeleton (1), and the connectors (2) includes an outer shell (3) and a connection terminal (4), the connection terminal (4) is arranged on the connector (2) by means of a fixing member (5), at least one end of the electric connection skeleton (1) is connected to the connection terminal (4), and insulating protective layers (6) are arranged between the electric connection skeletons (1) and on periphery of the electric connection skeletons. According to the multi-core electric connector assembly in the present disclosure, separation of the connection terminal and the connector caused by vibration of the electric connection skeleton in a running process of the vehicle can be avoided, and the service life can be prolonged; due to the fact that the at least two electric connection skeletons are included and can be respectively connected to a positive electrode end and a negative electrode end of a charging power source or a vehicle-mounted battery, a vehicle assembling procedure is simplified, the production cost is reduced, wiring in the vehicle is more concise, friction between the electric connection skeleton and the vehicle is prevented, high-voltage discharge caused by damage of the insulating protective layers is avoided, and traffic accidents are reduced. And a vehicle is included.

## Description

The present disclosure claims priority to Chinese Patent Application No. 202210250053.3, filed on March 14, 2022, and entitled "Multi-core Electric Connector Assembly and Vehicle", which is hereby incorporated by reference in its entirety.

### TECHNICAL FIELD

The present disclosure relates to the field of electric energy transmission, and particular to a multi-core electric connector assembly and a vehicle.

### BACKGROUND

With the popularization of new energy automotive, devices and facilities for providing electric energy for the new energy automotive are also developed. The connector assembly on the new energy automotive needs to meet the requirement for driving the high-power motor, so that the transmitted current is relatively large, and the diameter of the high-voltage cable on the connector assembly is also increased. At present, the high-voltage cable on the most connector assembly is multi-core copper cable and is large in weight and high in price, which are barriers that limit the popularization of the new energy automotive. Besides, although the multi-core cable is soft and can be conveniently processed and wired, due to the large cable diameter, the weight is large. In a traveling process of the vehicle, the cable frequently rub against a vehicle shell, resulting in damage of the insulating protective layer of the cable, which causes high-voltage discharge, damaging the vehicle in minor cases, and causing serious traffic accidents in serious cases.

Therefore, in the technical field of electric energy transmission, there is an urgent need for an electric energy transmission system which is excellent in electric conductivity, light in weight, low in cost, small in outer diameter, capable of avoiding electromagnetic interference, simple in structure and convenient to assemble.

### SUMMARY

One purpose of the present disclosure is to provide a new technical solution of a multi-core electric connector assembly.

According to a first aspect of the present disclosure, a multi-core electric connector assembly is provided and includes at least two electric connection skeletons and connectors arranged at two ends of the electric connection skeleton, and the connector includes an outer shell and a connection terminal, at least one end of the electric connection skeleton is connected to the connection terminal, the connection terminal is arranged on the connector, and insulating protective layers are arranged between the electric connection skeletons and on a periphery of the electric connection skeletons.

Optionally, a ratio of a distance between the electric connection skeletons to the thickness or diameter of the electric connection skeleton is 2% to 86%.

Optionally, the electric connection skeleton includes at least one bent portion.

Optionally, the connector and the electric connection skeleton are integrally formed.

Optionally, at least a portion of the electric connection skeleton is flexible.

Optionally, the cross sectional area of the electric connection skeleton is 3.5 mm² to 240 mm².

Optionally, a cross section of the electric connection skeleton is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

Optionally, a shape of a cross section of the electric connection skeleton is in a polygonal shape, and all corners of the polygonal shape are chamfered or rounded.

Optionally, the electric connection skeleton is a rigid body, and the tensile strength of the electric connection skeleton is higher than 75 MPa.

Optionally, a material of the connection terminal contains copper or a copper alloy, a material of the electric connection skeleton contains aluminum or an aluminum alloy, and the electric connection skeleton is electrically connected to the connection terminal in a welding or crimping manner.

Optionally, the welding manner includes one or more selected from a resistance welding manner, a friction welding manner, an ultrasonic welding manner, an arc welding manner, a laser welding manner, an electron beam welding manner, a pressure diffusion welding manner, a magnetic induction welding manner and a crimping manner.

Optionally, a connection manner for the connection terminal and the electric connection skeleton includes one or more selected from a threaded connection manner, a snap-fitting manner and a splicing manner.

Optionally, the connection terminal is provided with a through hole or a threaded hole, the electric connection skeleton is provided with a threaded hole or a through hole, and the through hole and/or the threaded hole are connected by means of bolt structure.

Optionally, the connection terminal is arranged on the connector by means of a fixing member.

Optionally, the bolt structure is provided with an anti-loosening member, the anti-loosening member is sleeved or snap-fitted between the bolt structure and the fixing member, and the anti-loosening member prevents the bolt structure from loosening.

Optionally, the fixing member is arranged on an inner wall of the outer shell, an inner wall of the fixing member is provided with a groove or a boss, a periphery of an end portion of the connection terminal is provided with a boss or a groove, and the boss is snap-fitted with the groove.

Optionally, when a cross section of the electric connection skeleton is in a rectangular shape, the electric connection skeletons are arranged inside the insulating protective layer in a up-down stacked manner.

Optionally, the electric connection skeletons are mirrorings of each other.

Optionally, an overlapping area of the electric connection skeletons in a stacking direction are 13% to 100%.

Optionally, when a cross section of the electric connection skeleton is in a shape apart from a rectangular shape, the electric connection skeletons are arranged inside the insulating protective layer in parallel in an axial direction.

Optionally, when a cross section of the electric connection skeleton is in a shape apart from a rectangular shape, the electric connection skeletons are arranged inside the insulating protective layer in a mutually twisted manner in an axial direction.

Optionally, a ratio of the twist length of mutual twisting of the electric connection skeletons to the maximum outer diameter of the electric connection skeleton is less than or equal to 15.

Optionally, a minimum thickness of the insulating protective layer between the stacked electric connection skeletons is 0.1 cm to 27 cm.

Optionally, a minimum thickness of the insulating protective layer between the stacked electric connection skeletons is 0.15 cm to 7 cm.

Optionally, the insulating protective layers are arranged between the electric connection skeletons and on the periphery of the electric connection skeletons in an injection molding manner.

Optionally, a periphery of the insulating protective layer is sleeved with a shielding layer, and the shielding layer is one of or a combination of a metal with a shielding effect and a composite material of the metal, and a plastic with a shielding effect or a rubber with a shielding effect or a textile with a shielding effect.

Optionally, the outer shell is internally provided with an inner shielding shell with a shielding effect, the inner shielding shell is electrically connected to the shielding layer, and an inner wall of the inner shielding shell is provided with the fixing member.

Optionally, an impedance between the inner shielding shell and the shielding layer is less than 80 mΩ.

Optionally, a transfer impedance of the inner shielding shell is less than 100 mΩ.

Optionally, a transfer impedance of the shielding layer is less than 100 mΩ.

Optionally, a periphery of the shielding layer is further sleeved with a sheath layer.

Optionally, a part of an inner surface of the outer shell is connected to a part of an outer surface of the sheath layer.

Optionally, one of the connectors is a charging socket.

According to the first aspect of the present disclosure, a vehicle is provided and includes the multi-core electric connector assembly.

The multi-core electric connector assembly according to the present disclosure has the following beneficial effects:
1. the electric connection skeleton is configured as the rigid body, in a traveling process of the vehicle, the electric connection skeleton cannot shake with the traveling of the vehicle, the friction with a vehicle shell is reduced, high-voltage discharge caused by damage of the insulating protective layer is avoided, traffic accidents are reduced, and the service life of the connector assembly is prolonged;
2. the electric connection skeleton is the rigid body, and the electric connection skeleton and the connection terminal are fixedly mounted on a vehicle body, so that the relative movement between the electric connection skeleton and the connection terminal is effectively restrained, abnormal sounds generated in the traveling process of the vehicle is avoided, the quality of the vehicle is improved, and the comfort when travelling in the car is improved;
3. the electric connection skeletons are up-down stacked, and currents in the two electric connection skeletons are the same in magnitude and opposite in direction, so that induced magnetic fields are the same in intensity and opposite in direction, the induced magnetic fields generated by the two electric connection skeletons cancel each other, the effect of shielding the electromagnetic interference is achieved, the anti-electromagnetic interference performance is improved, the shielding layer can be omitted, the production process is simplified, raw materials are saved, the production cost is reduced, and the market competitiveness is improved; and
4. the connection terminal is fixed to the connector by means of the fixing member, separation of the connection terminal and the connector caused by vibration of the electric connection skeleton in the traveling process of the vehicle can be avoided, and the service life of the connector assembly can be prolonged; and due to the fact that the at least two electric connection skeletons are included and can be respectively connected to a positive electrode end and a negative electrode end of a charging power source or a vehicle-mounted battery, a vehicle assembling procedure is simplified, the production cost is saved, and wiring in the vehicle is more concise.

Other features and advantages of the present disclosure will become clear through detailed description of embodiments of the present disclosure below with reference to the drawings.

### BRIEF DESCRIPTION OF THE DRAWINGS

Drawings incorporated in the specification and constituting a portion of the specification show embodiments of the present disclosure, and are used for explaining principles of the present disclosure together with the explanations thereof.
FIG. 1 is a structural schematic diagram of a multi-core electric connector assembly according to the present disclosure;
FIG. 2 is an axial section view of an embodiment of a connection position of a connection terminal with an electric connection skeleton;
FIG. 3 is an axial section view of another embodiment of a connection position of a connection terminal with an electric connection skeleton;
FIG. 4 is an axial section view of an embodiment of an anti-loosening member being provided at a connection position of a connection terminal with an electric connection skeleton;
FIG. 5 is an axial section view of another embodiment of an anti-loosening member being provided at a connection position of a connection terminal with an electric connection skeleton;
FIG. 6 is a top view of the anti-loosening member being provided at the connection position of the connection terminal with the electric connection skeleton in FIG. 5;
FIG. 7 is a radial section view of an embodiment of two stacked electric connection skeletons each of which has a rectangular cross section;
FIG. 8 is a radial section view of another embodiment of two stacked electric connection skeletons each of which has a rectangular cross section;
FIG. 9 is a structural schematic diagram of an embodiment of two twisted electric connection skeletons each of which has a circular cross section;
FIG. 10 is a radial section view of the embodiment of the two twisted electric connection skeletons each of which has a the circular cross section in FIG. 9;
FIG. 11 is an axial section view of an embodiment of a connection position of an electric connection skeleton with a connector; and
FIG. 12 is an axial section view of another embodiment of a connection position of an electric connection skeleton with a connector.

### DESCRIPTION OF THE EMBODIMENTS

Various embodiments of the present disclosure will now be described in detail with reference to the drawings. It should be noted that, unless otherwise specified, the relative arrangements, numeric expressions and values of components and steps set out in these embodiments do not limit the scope of the present disclosure.

Actually, the following description of at least one embodiment is only for the illustrative purpose, and shall not be construed as any limitation on the present disclosure or the application and use thereof.

For those of ordinary skill in the art, the known techniques, the known methods and the known devices may not be discussed in detail. However, under appropriate conditions, the techniques, methods and devices should be regarded as a part of the specification.

In all examples shown and discussed here, any specific value should be explained as exemplary only, and does not serve as a limitation. Therefore, other examples of the embodiments may have different values.

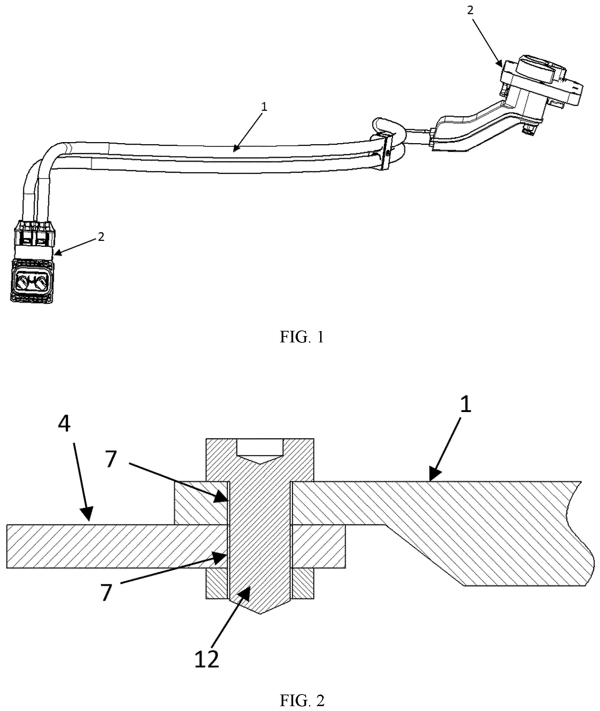

A multi-core electric connector assembly according to the present disclosure, as shown in FIG. 1 to FIG. 12, includes at least two electric connection skeletons 1 and connectors 2 arranged at two ends of the electric connection skeleton 1, and the connector 2 includes an outer shell 3 and a connection terminal 4, at least one end of the electric connection skeleton 1 is connected to the connection terminal 4, the connection terminal 4 is arranged on the connector 2, and insulating protective layers 6 are arranged between the electric connection skeletons 1 and on a periphery of the electric connection skeletons.

During specific implementation, the connection terminal 4 is fixed to the connector 2, separation of the connection terminal 4 and the connector 2 caused by vibration of the electric connection skeleton 1 in a traveling process of a vehicle can be avoided, thereby prolonging the service life of the multi-core electric connector assembly; and due to the fact that the at least two electric connection skeletons 1 are included and can be respectively connected to a positive electrode end and a negative electrode end of a charging power source or a vehicle-mounted battery, so that a vehicle assembling procedure is simplified, the production cost is saved, and wiring in the vehicle is more concise.

The electric connection skeletons are up-down stacked, and currents in the two electric connection skeletons are the same in magnitude and opposite in direction, so that induced magnetic fields are the same in intensity and opposite in direction, the induced magnetic fields generated by the two electric connection skeletons cancel each other, the effect of shielding the electromagnetic interference is achieved, the anti-electromagnetic interference performance is improved, the shielding layer can be omitted, the production process is simplified, raw materials are saved, the production cost is reduced, and the market competitiveness is improved.

In an embodiment of the multi-core electric connector assembly according to the present disclosure, a ratio of a distance between the electric connection skeletons 1 to the thickness or diameter of the electric connection skeleton 1 is 2% to 86%.

During specific implementation, when the electric connection skeleton 1 are aluminum busbars and the overlapping area of the two electric connection skeletons 1 in a stacking direction are 100%, the influence of the ratio of the distance between the two electric connection skeletons 1 to the thickness of the electric connection skeleton 1 on cancellation of the magnetic fields is shown in Table 1, and the magnetic field cancellation percent greater than 30% is a qualified value.

Meanwhile, the electric connection skeletons 1 in each sample are cut into two sections, in one section, the insulating protective layer 6 between the two electric connection skeletons 1 is dissected to observe whether there is a hole formed by insufficient injection molding, it is unqualified when there is a hole, and if there are the hole it is recorded in Table 1. In the other section, different high voltages are applied between the two electric connection skeletons 1, so as to test the voltage resistance of the insulating protective layer 6 between the two electric connection skeletons 1. The breakdown voltage of the insulating protective layer lower than 2.1 KV is unqualified and is recorded in Table 1.

**Table 1: Influence of ratio of distance between two electric connection skeletons 1 to thickness of electric connection skeleton 1 on cancellation of magnetic fields in case of an overlapping area of two stacked electric connection skeletons 1 being 100%**

| Ratio of distance between two electric connection skeletons 1 to thickness of electric connection skeleton 1 (%) | Magnetic field cancellation percent | | | | | Whether there is a hole | Average value of breakdown voltage (KV) |
|---|---|---|---|---|---|---|---|
| | First sample | Second sample | Third sample | Fourth sample | Fifth sample | | |
| 100 | 0.0% | 0.0% | 0.0% | 0.0% | 0.0% | No | 4.73 |
| 95 | 11.2% | 11.3% | 11.4% | 10.8% | 11.0% | No | 4.59 |
| 90 | 16.2% | 21.6% | 26.1% | 25.9% | 24.4% | No | 4.35 |
| 86 | 30.4% | 30.9% | 30.3% | 30.6% | 30.3% | No | 4.31 |
| 75 | 41.6% | 42.1% | 44.1% | 41.7% | 44.3% | No | 4.29 |
| 70 | 51.4% | 51.3% | 51.9% | 53.8% | 52.9% | No | 3.95 |
| 64 | 58.3% | 53.1% | 57.9% | 59.2% | 61.4% | No | 3.82 |
| 59 | 70.4% | 61.4% | 66.1% | 68.3% | 71.2% | No | 3.70 |
| 55 | 74.9% | 76.3% | 77.5% | 76.1% | 77.9% | No | 3.58 |
| 50 | 81.4% | 81.8% | 78.7% | 78.4% | 78.2% | No | 3.54 |
| 46 | 84.6% | 86.7% | 89.8% | 84.8% | 81.9% | No | 3.40 |
| 41 | 91.3% | 89.4% | 91.1% | 91.3% | 91.6% | No | 3.31 |
| 34 | 92.8% | 91.4% | 92.9% | 93.4% | 92.5% | No | 3.15 |
| 30 | 99.8% | 99.9% | 100.0% | 100.0% | 99.5% | No | 2.94 |
| 20 | 99.0% | 99.80% | 100.0% | 100.0% | 99.4% | No | 2.88 |
| 15 | 100.0% | 99.8% | 100.0% | 99.9% | 100.0% | No | 2.72 |
| 13 | 100.0% | 99.9% | 100.0% | 99.9% | 100.0% | No | 2.62 |
| 9 | 99.8% | 99.8% | 100.0% | 99.9% | 100.0% | No | 2.45 |
| 5 | 99.8% | 99.9% | 100.0% | 99.9% | 99.8% | No | 2.25 |
| 2 | 99.7% | 99.8% | 100.0% | 99.8% | 99.9% | No | 2.22 |
| 1.5 | 99.8% | 99.7% | 100.0% | 99.8% | 100.0% | Yes | 1.91 |

In this embodiment, the overlapping area means the percent of the overlapping area of the two electric connection skeletons 1 in the stacking direction to the area of one electric connection skeleton 1.

It can be seen from Table 1 that when the overlapping area of the two electric connection skeletons 1 in the stacking direction are 100% and the ratio of the distance between the two electric connection skeletons 1 to the thickness of the electric connection skeleton 1 is 2% to 86%, the magnetic field cancellation percent is qualified, which is effective in preventing electromagnetic interference.

When the ratio of the distance between the two electric connection skeletons 1 to the thickness of the electric connection skeleton 1 is less than 2%, the distance between the two electric connection skeletons 1 is too short, and the insulating protective layer 6 between the two electric connection skeletons 1 cannot be injection-molded into a narrow gap, so that there is a hole in the insulating protective layer 6 between the two electric connection skeletons 1. It also makes the breakdown voltage of the insulating protective layer 6 between the two electric connection skeletons 1 be lower than 2.1 KV, so that it is unqualified when the ratio of the distance between the two electric connection skeletons 1 to the thickness of the electric connection skeleton 1 is less than 2%, and when the ratio of the distance between the two electric connection skeletons 1 to the thickness of the electric connection skeleton 1 is greater than 86%, the magnetic field cancellation percent less than 30% is also unqualified. Therefore, the inventor chooses that the ratio of the distance between the two electric connection skeletons 1 to the thickness of the electric connection skeleton 1 is 2% to 86%.

In an embodiment of the multi-core electric connector assembly according to the present disclosure, the electric connection skeleton 1 includes at least one bent portion.

During specific implementation, the bent portion can be arranged on electric connection skeleton 1 according to requirements, so that there is the bent portion in the position where the direction of the electric connection skeleton 1 needs to be changed in a wiring process on the vehicle, wiring by an operator is facilitated, processing hours of the vehicle are shortened, thereby reducing the production cost of the vehicle, and increasing the market competitiveness.

In an embodiment of the multi-core electric connector assembly according to the present disclosure, the connector 2 and the electric connection skeleton 1 are integrally formed.

During specific implementation, the connector 2 and the electric connection skeleton 1 are integrally formed, so that the connection stability of the electric connection skeleton 1 and the connector 2 can be improved, and thereby prolonging the service life of the electric connector assembly.

In an embodiment of the multi-core electric connector assembly according to the present disclosure, at least a portion of the electric connection skeleton 1 is flexible.

During specific implementation, the portion of electric connection skeleton 1 that needs to be bent is set to be flexible, so that the electric connector assembly is easier to mount when assembled on the vehicle, the operation is facilitated, and the production hours are shortened.

During specific implementation, at least a portion of electric connection skeleton 1 is set to be flexible (that is, the outer shell), so that it can be fixed to a vehicle body conveniently when assembled on the vehicle body, abnormal sounds generated between the outer shell 3 and a vehicle shell or the connector 2 connected to two ends due to vibration can be reduced, and breakage at the connection position with the connection terminal 4 can be avoided. Meanwhile, short-circuit phenomena and burning of the vehicle in serious cases, caused by the electric connection of the outer shell 3 with the vehicle body due to damage to the insulating protective layer led by frequent friction of a part of the outer shell 3 with the vehicle body are also avoided.

In an embodiment of the multi-core electric connector assembly according to the present disclosure, the cross sectional area of the electric connection skeleton 1 is 3.5 mm² to 240 mm².

The cross sectional area of the electric connection skeleton 1 determines the current that can be conducted by the electric connection skeleton 1, generally, the electric connection skeleton 1 for achieving signal conduction has a smaller current, and the sectional area of the electric connection skeleton 1 is also small, for example, the minimum sectional area of the electric connection skeleton 1 for transmitting signals can be 3.5 mm²; and the electric connection skeleton 1 for achieving power source conduction has a lager current, the cross sectional area of the electric connection skeleton 1 is also large, for example, for an automotive storage battery wire harness, the maximum sectional area of the electric connection skeleton 1 can reach 240 mm².

In an embodiment of the multi-core electric connector assembly according to the present disclosure, a cross section of the electric connection skeleton 1 is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

During specific implementation, the shape of the cross section of the electric connection skeleton 1 can be designed specifically according to a wiring space in the vehicle, thereby facilitating wiring in the vehicle and assembly of the vehicle by the operator.

In an embodiment of the multi-core electric connector assembly according to the present disclosure, a shape of a cross section of the electric connection skeleton is in a polygonal shape, and all corners of the polygonal shape are chamfered or rounded.

During specific implementation, all the corners of electric connection skeleton 1 with the cross section in the polygonal shape are chamfered or rounded, so that the connection between the electric connection skeleton 1 and the connection terminal can be facilitated, when being welded or crimped, the electric connection skeleton 1 is connected to the connection terminal more firmly, the contact area is larger, and the conduction current is better; heating and even burning accidents caused by excessively large resistance caused by excessively a small contact area between the electric connection skeleton 1 and the connection terminal during connection are avoided; and casualties and the property loss caused by scratching of the insulating protective layer 6 by an edge formed by two adjacent sides of the polygonal shape during use can also be avoided.

In an embodiment of the multi-core electric connector assembly according to the present disclosure, the electric connection skeleton 1 is a rigid body, and the tensile strength of the electric connection skeleton 1 is higher than 75 MPa.

The rigid body refers to an object with the shape and size unchanged and relative positions of various points inside unchanged during motion and after being stressed. An absolute rigid body does not actually exist and is only an ideal model, because any object will be deformed to a certain extent after being stressed. If the deformation degree is very low relative to geometric dimensions of the object, the deformation can be omitted when the motion of the object is researched. Therefore, during use of the electric connection skeleton 1 made of the rigid body material, the produced deformation amount is very little and can be omitted, and as the tensile strength of the rigid body increases, the deformation amount is reduced.

In order to verify the influences of the tensile strength of the electric connection skeleton 1 on the torque of the electric connection skeletons 1 when being bent and whether the electric connection skeletons 1 have abnormal sounds in a vibration process, the inventor selects electric connection skeleton 1 samples with the same dimensions and different tensile strength to test the torque of the electric connection skeletons 1 when being bent and whether the electric connection skeletons 1 have abnormal sounds in the vibration process.

A test method for the tensile value of the electric connection skeleton 1 is as follows: using a universal tensile test machine, respectively fixing the two ends of the electric connection skeleton 1 to tensile jigs of the universal tensile test machine, performing stretching at a speed of 50 mm/min, and recording the tensile value when finally being pulled apart. In this embodiment, the tensile value greater than 1600 N is a qualified value.

A test method for the torque of the electric connection skeletons 1 are as follows: using a torque tester, and when the electric connection skeleton 1 is bent by 90° at the same radius and the same speed, testing the torque value of deformation of the electric connection skeleton 1 in the bending process. In this embodiment, the torque value less than 60 N·m is an exemplary value.

Whether the electric connection skeleton 1 has the abnormal sounds is tested with such a method that the electric connection skeleton 1 samples with the same dimensions and different tensile strength and the connectors 2 with the same dimensions are selected, assembled together and fixed on a vibration test platform, and in a vibration test process, whether the electric connection skeletons 1 have the abnormal sounds is observed.

**Table 2: Influences of different tensile strength on the torque value and abnormal sounds of electric connection skeletons 1**

| Different tensile strength (MPa) | | | | | | | | | | | |
|---|---|---|---|---|---|---|---|---|---|---|---|
| 60 | 70 | 75 | 80 | 120 | 200 | 280 | 330 | 380 | 430 | 480 | 500 |

| Tensile value of electric connection skeleton 1 when being pulled apart (N) | | | | | | | | | | | |
|---|---|---|---|---|---|---|---|---|---|---|---|
| 1410 | 1521 | 1678 | 1711 | 1801 | 1815 | 1856 | 1909 | 1950 | 1989 | 2040 | 2067 |

| Torque value when being bent in horizontal direction (N·m) | | | | | | | | | | | |
|---|---|---|---|---|---|---|---|---|---|---|---|
| 6 | 8 | 9 | 18 | 27 | 34 | 44 | 46 | 49 | 52 | 59 | 70 |

| Whether the electric connection skeleton 1 has abnormal sounds | | | | | | | | | | | |
|---|---|---|---|---|---|---|---|---|---|---|---|
| Yes | Yes | No | No | No | No | No | No | No | No | No | No |

It can be seen from Table 2 that when the tensile strength of the electric connection skeleton 1 is less than 75 Mpa, the tensile value of the electric connection skeleton 1 when being pulled apart is less than 1600 N, then the strength of the electric connection skeleton 1 is not high, the skeleton is pulled apart easily under a small external force, resulting in failure of functions of the electric connection skeleton 1, and thus the purpose of electric energy transmission cannot be achieved.

On the other hand, the greater the tensile strength value of the electric connection skeleton 1, the less likely the electric connection skeleton 1 is to be deformed, and thus, in the vibration test process, the less likely the electric connection skeleton 1 is to have the abnormal sounds caused by vibration relative to the connectors 2 connected to the two ends; and on the contrary, the smaller the tensile strength value of the electric connection skeleton 1, the more likely the electric connection skeleton 1 is to be deformed, and thus, in the vibration test process, the more likely the electric connection skeleton 1 is to have the abnormal sounds caused by vibration relative to the connectors 2 connected to the two ends. It can be seen from Table 2 that when the tensile strength of the electric connection skeleton 1 is less than or equal to 75 Mpa, the electric connection skeleton 1 can produce abnormal sounds in the vibration test process. Therefore, for the inventor, the tensile strength of the electric connection skeleton 1 is exemplarily higher than 75 MPa.

Meanwhile, it can also be seen from Table 2 that when the tensile strength of the electric connection skeleton 1 is higher than 480 Mpa, the torque value of the electric connection skeleton 1 when being bent by 90° is greater than 60 N·m, and then the electric connection skeleton 1 is not bent easily. Therefore, for the inventor, the tensile strength of the electric connection skeleton 1 is further exemplarily higher than 75 MPa and lower than or equal to 480 MPa.

The electric connection skeletons are configured as the rigid bodies, in the traveling process of the vehicle, the electric connection skeletons cannot shake with the traveling of the vehicle, the friction with the vehicle shell is reduced, high-voltage discharge caused by damage of the insulating protective layers is avoided, traffic accidents are reduced, and the service life of the connector assembly is prolonged. The electric connection skeletons are the rigid bodies, and the electric connection skeletons and the connection terminals are fixedly mounted on the vehicle body, so that the relative movement between the electric connection skeletons and the connection terminals is effectively restrained, the abnormal sounds generated in the traveling process of the vehicle is avoided, the quality of the vehicle is improved, and the comfort during riding is improved.

In an embodiment of the multi-core electric connector assembly according to the present disclosure, a material of the connection terminal 4 contains copper or a copper alloy, a material of the electric connection skeleton 1 contains aluminum or an aluminum alloy, and the electric connection skeleton 1 is electrically connected to the connection terminal 4 in a welding or crimping manner.

Further, the welding manner includes one or more selected from a resistance welding manner, a friction welding manner, an ultrasonic welding manner, an arc welding manner, a laser welding manner, an electron beam welding manner, a pressure diffusion welding manner, a magnetic induction welding manner, and a crimping manner.

During specific implementation, the electric connection skeleton 1 is connected to the connection terminal 4 in the welding manner. The used welding manner includes one or more selected from a resistance welding manner, a friction welding manner, an ultrasonic welding manner, an arc welding manner, a laser welding manner, an electron beam welding manner, a pressure diffusion welding manner and a magnetic induction welding manner. The contact position of the connection terminal and the electric connection skeleton is fused and connected by means of concentrated heat or pressure, stable connection is achieved by means of the welding manner, connection of dissimilar materials can be achieved, and the electric conduction effect is better due to fusion of the contact position.

The resistance welding manner refers to a method of using a large current to pass through a contact point between an electrode and a workpiece and generating heat by the contact resistance to achieve welding.

The friction welding manner refers to a method of using heat produced by rubbing of a contact face of the workpiece as a heat source and enabling the workpiece to be subjected to plastic deformation under the action of pressure so as to perform welding.

The ultrasonic welding manner means that high-frequency vibration waves are transmitted to surfaces of two objects to be welded and the surfaces of the two objects rub against each other, under the condition of pressurization, to achieve fusion between two molecular layers.

The arc welding manner means that an electric arc serves as a heat source, by means of the physical phenomenon of air discharge, electric energy is converted into heat energy and mechanical energy required by welding, so as to achieve the purpose of connecting metals, and main methods include a shielded metal arc welding method, a submerged arc welding method and a gas shielded welding method.

The laser welding manner is an efficient precision welding method using a laser beam with a high energy density as a heat source.

The friction welding manner refers to a method of using heat produced by rubbing of a contact face of the workpiece as a heat source and enabling the workpiece to be subjected to plastic deformation under the action of pressure so as to perform welding.

The electron beam welding manner means an accelerated and focused electron beam bombards a welding face placed in the vacuum or non-vacuum so that a welded workpiece is melted for welding.

The pressure welding manner is a method for applying pressure to a welded workpiece so that connection faces make close contact to generate certain plastic deformation to complete welding.

The magnetic induction welding manner means two welded workpieces produce an instantaneous high-speed collision under the action of a strong pulsed magnetic field, surface layers of materials are subjected to high pressure waves, and thus atoms of the two materials meet within the atomic spacing, thereby forming stable metallurgical bonding on an interface. It is one kind of solid-state cold welding, by which conducting metals with similar or dissimilar properties can be welded together.

With regard to the crimping manner, crimping is a production technology for stamping the electric connection skeleton 1 and the connection terminal 4 into a whole by means of a crimping machine after assembly. The crimping has an advantage of mass production, and a large number of products with stable quality can be quickly manufactured by means of an automatic crimping machine.

In an embodiment of the multi-core electric connector assembly according to the present disclosure, a connection manner for the connection terminal 4 and the electric connection skeleton 1 includes one or more selected from a threaded connection manner, a snap-fitting manner and a splicing manner.

During specific implementation, the connection terminal 4 and the electric connection skeleton 1 are connected through threaded connection, snap-fitting and splicing, and during later use and maintenance, a customer can select to replace damaged parts according to specific conditions, thereby reducing the maintenance cost of the customer.

The splicing manner means that the connection terminal 4 and the electric connection skeleton 1 are respectively provided with a groove and a corresponding protrusion, and assembly is performed by means of joggle joint or splicing of the groove and the protrusion so as to connect the two parts together. The splicing manner has advantages of stable connection and detachability.

The threaded connection manner refers to screwed joint and detachable connection in which the connection terminal 4 and the electric connection skeleton 1 are connected into a whole by means of threaded structures matched with each other.

The snap-fitting manner means that the connection terminal 4 and the electric connection skeleton 1 are respectively provided with a clamping jaw or a corresponding clamping groove, and assembly is performed by means of the clamping groove and the clamping jaw to connect the two parts together. The snap-fitting manner has advantages of quick connection and detachability.

Further, as shown in FIG. 2 to FIG. 5, the connection terminal 4 is provided with a through hole 7 or a threaded hole 13, the electric connection skeleton 1 is provided with a threaded hole 13 or a through hole 7, and the through hole 7 and/or the threaded hole 13 are connected by means of bolt structure 12.

During specific implementation, the connection terminal 4 and the electric connection skeleton 1 are connected in the threaded connection, snap-fitting or splicing manner, so that the connection terminal 4 and the electric connection skeleton 1 are detachably connected, and when a certain part is damaged, the damaged part is convenient to maintain and replace.

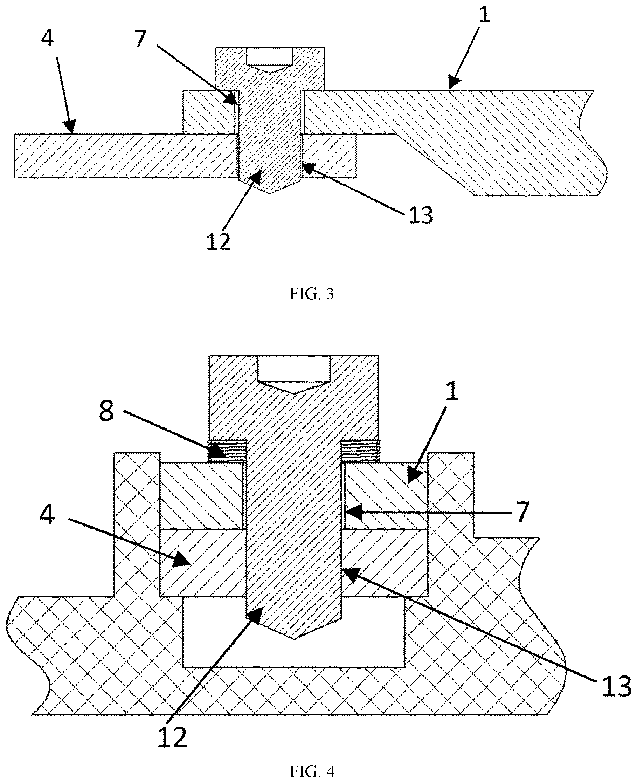

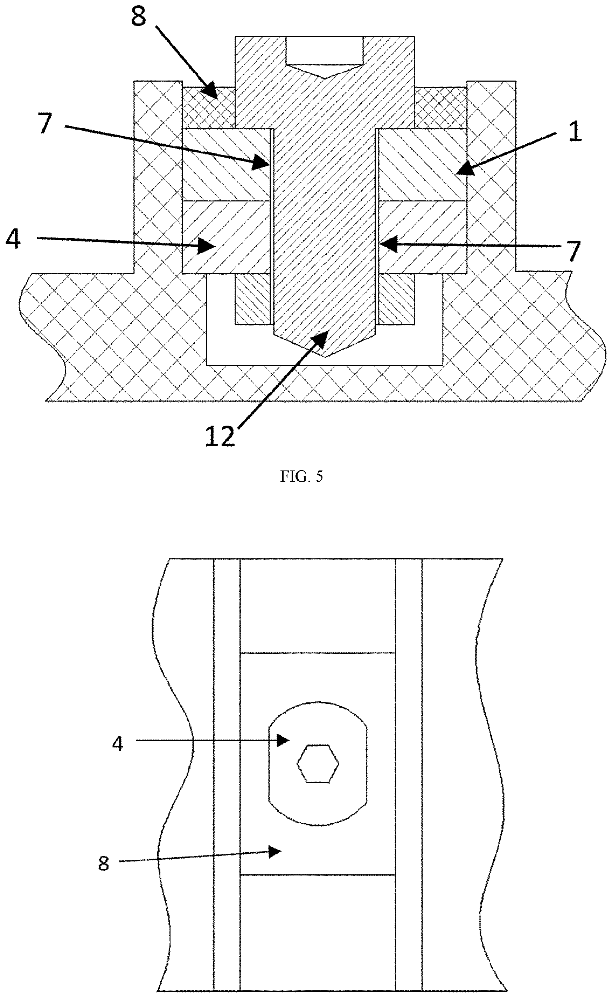

As shown in FIG. 2 and FIG. 5, the through holes 7 are formed in connection positions of connection terminal 4 and the electric connection skeleton 1, and the bolt structure 12 passes through the two through holes to be connected to a nut; and as shown in FIG. 3 and FIG. 4, the bolt structure 12 sequentially passes through the through hole 7 and the threaded hole 13, and an external thread at a screw of the bolt structure 12 is connected to the thread of the threaded hole 13.

In an embodiment of the multi-core electric connector assembly according to the present disclosure, the connection terminal 4 is arranged on the connector 2 by means of a fixing member 5.

During specific implementation, the fixing member 5 is arranged on the connector 2, the connection terminal 4 are fixed by means of the fixing member 5, and the position of the fixing member 5 can be reasonably set according to space of the connector 2, so that the connection terminal 4 are directly connected to the connector 2, the more flexible effect is achieved, and the relative positions can be determined according to actual requirements.

Further, as shown in FIG. 4 and FIG. 5, the bolt structure 12 is provided with an anti-loosening member 8, the anti-loosening member 8 is sleeved or snap-fitted between the bolt structure 12 and the fixing member 5, and the anti-loosening member 8 prevents the bolt structure 12 from loosening.

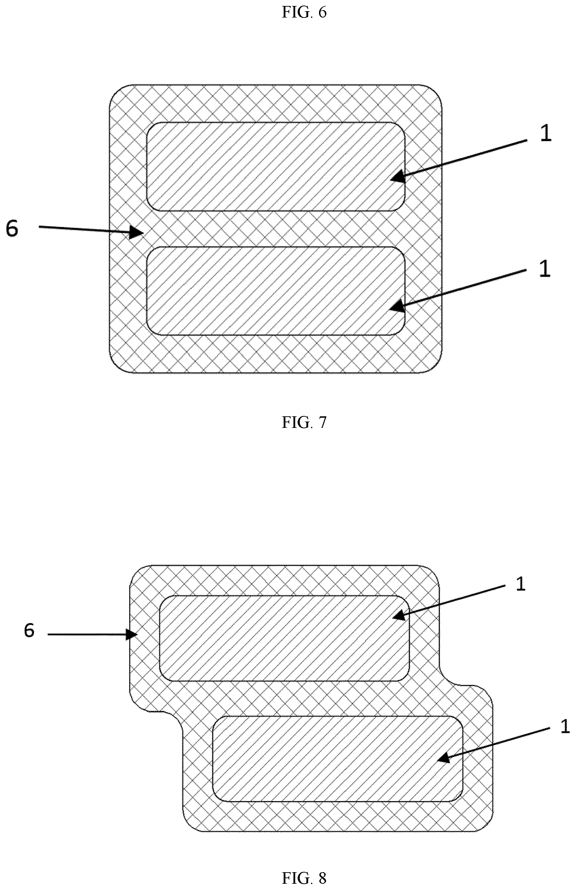

During specific implementation, the anti-loosening member 8 is arranged, so that the condition that the multi-core electric connector assembly cannot achieve electric conduction due to falling off as a result of off as a result of vibration causing loosening between the connection terminal 4 and the fixing member 5 is avoided in the traveling process of the vehicle. As shown in FIG. 4, anti-loosening member 8 can be set as a compression spring, the compression spring is arranged between the head of the bolt structure 12 and the fixing member 5, and after the bolt structure 12 is tightened, a certain acting force is provided for the head of the bolt structure 12 by means of the compression spring, so as to prevent the bolt structure 12 from being loosened. Besides, as shown in FIG. 5 and FIG. 6, anti-loosening member 8 is a cuboid, the middle of which is provided with a through hole for accommodating the head of the bolt structure 12, and a periphery of the cuboid is snap-fitted in a clamping groove for fixing the connection terminal 4 and the electric connection skeleton 1 in the connector 2, thereby preventing the bolt structure 12 from being loosened.

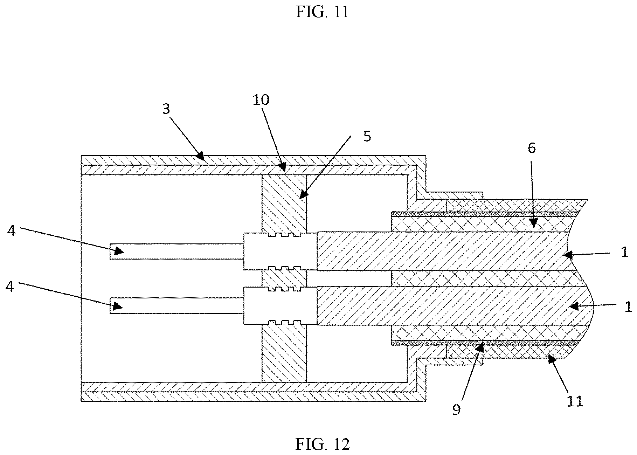

In an embodiment of the multi-core electric connector assembly according to the present disclosure, as shown in FIG. 11, the fixing member 5 is arranged on an inner wall of the outer shell 3, an inner wall of the fixing member 5 is provided with a groove or a boss, a periphery of an end portion of the connection terminal 4 is provided with a boss or a groove, and the boss is snap-fitted with the groove.

During specific implementation, the fixing member 5 and the connection terminal 4 are connected in the snap-fitting manner, so that when one of the connection terminal 4 or outer shell 3 is damaged, the damaged part can be timely replaced, the maintenance cost is reduced, and the operation is convenient and quick.

Further, as shown in FIG. 7 and FIG. 8, when a cross section of the electric connection skeleton 1 is in a rectangular shape, the electric connection skeletons 1 are arranged inside the insulating protective layer 6 in an up-down stacked manner. It is ensured that the electric connection skeletons 1 arranged in the up-down stacked manner are insulated from each other.

Further, the electric connection skeletons 1 are mirrorings of each other.

During specific implementation, the electric connection skeletons are the mirrorings of each other, and currents in the two electric connection skeletons 1 are the same in magnitude and opposite in direction, so that induced magnetic fields are the same in intensity and opposite in direction, the induced magnetic fields generated by the two electric connection skeletons 1 cancel each other, the effect of shielding the electromagnetic interference is achieved, the anti-electromagnetic interference performance is improved, the shielding layer can be omitted, the production process is simplified, raw materials are saved, the production cost is reduced, and the market competitiveness is improved.

In an embodiment of the multi-core electric connector assembly according to the present disclosure, an overlapping area of the electric connection skeletons 1 in a stacking direction are 13% to 100%.

When the distance between the two electric connection skeletons 1 is 7 cm, Table 3 shows the influence of the overlapping area of the two electric connection skeletons 1 in the stacking direction on cancellation of the magnetic fields, and the magnetic field cancellation percent greater than 30% is a qualified value.

**Table 3: Influence of overlapping area of stacked electric connection skeletons 1 on cancellation of magnetic fields in case of distance between two electric connection skeletons 1 being 7 cm**

| Overlapping area of stacked electric energy transmission guide rails (A) | Magnetic field cancellation percent | | | | |
|---|---|---|---|---|---|
| | First sample | Second sample | Third sample | Fourth sample | Fifth sample |
| 0% | 0.0% | 0.0% | 0.0% | 0.0% | 0.0% |
| 10% | 12.1% | 12.2% | 11.8% | 12.0% | 11.9% |
| 13% | 30.1% | 30.8% | 31.1% | 31.3% | 32.1% |
| 25% | 33.1% | 33.8% | 34.1% | 34.7% | 35.1% |
| 40% | 40.1% | 42.8% | 43.1% | 43.9% | 44.6% |
| 50% | 45.8% | 43.6% | 46.9% | 48.3% | 43.6% |
| 70% | 49.9% | 50.3% | 50.8% | 51.2% | 49.8% |
| 90% | 60.2% | 60.7% | 60.1% | 60.6% | 61.1% |
| 95% | 80.1% | 80.1% | 80.9% | 80.8% | 80.8% |
| 98% | 97.3% | 97.8% | 97.2% | 97.4% | 97.1% |
| 100% | 99.8% | 100.0% | 100.0% | 100.0% | 99.9% |

It can be seen from Table 3 that when the distance between the two electric connection skeletons 1 is 7 cm, the overlapping area of the two electric connection skeletons 1 in the stacking direction is 13% to 100%, the magnetic field cancellation percent is qualified, a certain effect is achieved for electromagnetic interference prevention, the effect is obvious when the overlapping area of the two electric connection skeletons 1 in the stacking direction is 90% or above, and the effect is the best when the overlapping area of the two electric connection skeletons 1 in the stacking direction is 100%.

Further, when a cross section of the electric connection skeleton 1 is in a shape apart from the rectangular shape, the electric connection skeletons 1 are arranged inside the insulating protective layer 6 in parallel in an axial direction.

During specific implementation, the electric connection skeletons 1 are arranged inside the insulating protective layer 6 in parallel in the axial direction, burning accidents caused by short circuiting between the two electric connection skeletons 1 can be prevented, and the electric connection skeletons 1 in an electrified state are isolated from the outside, thereby preventing people from getting an electric shock and injured.

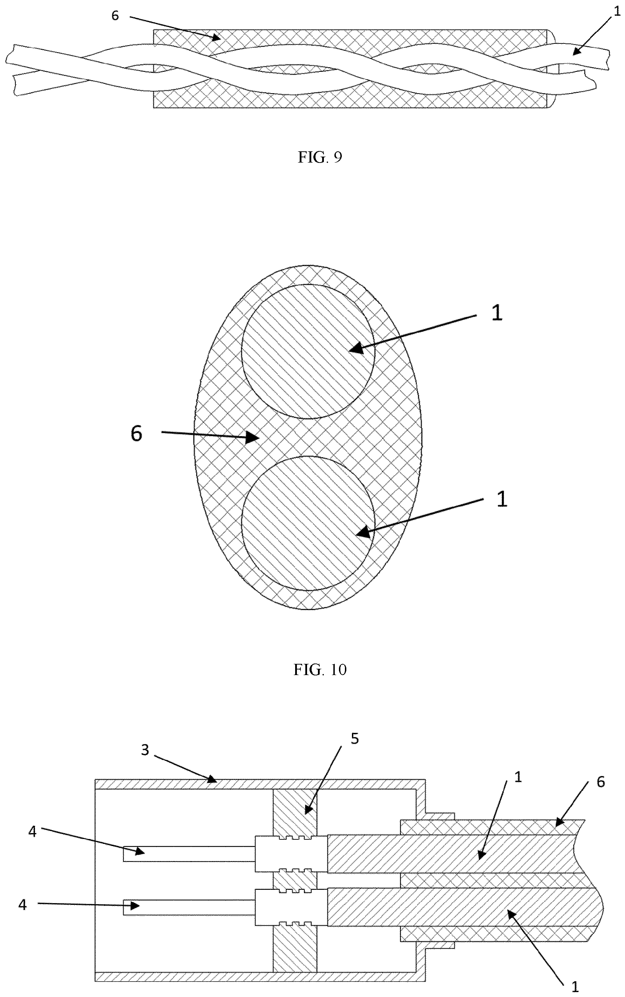

Further, as shown in FIG. 9 and FIG. 10, when a cross section of the electric connection skeleton 1 is in a shape apart from the rectangular shape, the electric connection skeletons 1 are arranged inside the insulating protective layer 6 in a mutually twisted manner in an axial direction.

During specific implementation, the two electric connection skeletons are arranged inside the insulating protective layer 6 in the twisted manner, burning accidents caused by short circuiting between the two electric connection skeletons 1 can be prevented, and the electric connection skeletons 1 in an electrified state are isolated from the outside, thereby preventing people from getting an electric shock and injured.

Through twisting, the outer diameter of a cable can be reduced, thereby facilitating storage and transportation of the electric connection skeletons during production, and saving the assembly space when assembing to the vehicle.

In the twisted electric connection skeletons 1, currents in the two electric connection skeletons 1 are the same in magnitude and opposite in direction, so that induced magnetic fields are the same in intensity and opposite in direction, the induced magnetic fields generated by the two electric connection skeletons 1 cancel each other, the effect of shielding the electromagnetic interference is achieved, the anti-electromagnetic interference performance is improved, the shielding layer can be omitted, the production process is simplified, raw materials are saved, the production cost is reduced, and the market competitiveness is improved.

Further, a ratio of the twist length of mutual twisting of the electric connection skeletons 1 to the maximum outer diameter of the electric connection skeleton 1 is less than or equal to 15.

When the cross sections of the two electric connection skeletons 1 are circular and the distance between the two electric connection skeletons 1 is 7 cm, the two electric connection skeletons 1 are twisted into a cable, Table 4 shows the influence of the ratio of the twist length of mutual twisting of the electric connection skeletons 1 to the maximum outer diameter of the electric connection skeleton 1 on cancellation of the magnetic fields, and the magnetic field cancellation percent greater than 30% is a qualified value.

**Table 4 Influence of ratio of twist length of mutual twisting of electric connection skeletons 1 to maximum outer diameter of electric connection skeleton 1 on cancellation of magnetic fields**

| Ratio of twist length of mutual twisting of electric connection skeletons 1 to maximum outer diameter of electric connection skeleton 1 | | | | | | | | | | | |
|---|---|---|---|---|---|---|---|---|---|---|---|
| 3 | 4 | 5 | 7 | 8 | 9 | 10 | 11 | 13 | 15 | 16 | 18 |

| Magnetic field cancellation percent | | | | | | | | | | | |
|---|---|---|---|---|---|---|---|---|---|---|---|
| 99.9 | 92.5 | 83.6 | 74.6 | 65.7 | 59.8 | 50.9 | 43.1 | 36.7 | 30.8 | 28.4 | 27.3 |

When the ratio of the twist length of mutual twisting of the electric connection skeletons 1 to the maximum outer diameter of the electric connection skeleton 1 is less than or equal to 15, the cancellation percent is qualified, and the very good technical effect is achieved for electromagnetic interference prevention. Therefore, the inventor chooses that the ratio of the twist length of mutual twisting of the electric connection skeletons 1 to the maximum outer diameter of the electric connection skeleton 1 is less than or equal to 15. Besides, when the ratio of the twist length of mutual twisting of the electric connection skeletons 1 to the maximum outer diameter of the electric connection skeleton 1 is less than or equal to 2, in a process of twisting the two electric connection skeletons 1, the electric connection skeletons 1 will be broken and cannot be twisted into the cable, so that the experimental comparison cannot be performed.

Further, a minimum thickness of the insulating protective layer 6 between the stacked electric connection skeletons 1 is 0.1 cm to 27 cm.

Further, a minimum thickness of the insulating protective layer 6 between the stacked electric connection skeletons 1 is 0.15 cm to 7 cm.

During specific implementation, the cross sections of the two electric connection skeletons 1 being in the rectangular shape is taken as an example for illustration, the width directions of the two electric connection skeletons 1 are parallel to each other, the electric connection skeletons 1 are mirrorings of each other, the thickness of the insulating protective layer 6 between the two electric connection skeletons 1 is H, and the stacking direction of the two electric connection skeletons 1 is a yp-down direction.

When the overlapping area of the two electric connection skeletons 1 in the stacking direction are 100%, Table 5 shows the influence of the thickness H of the insulating protective layer 6 between the two electric connection skeletons 1 on cancellation of the magnetic fields, and the magnetic field cancellation percent greater than 30% is a qualified value.

Meanwhile, the electric connection skeletons 1 in each sample are cut into two sections, in one section, the insulating protective layer 6 between the two electric connection skeletons 1 is dissected to observe whether there is a hole formed by insufficient injection molding, it is unqualified when there is a hole, and if there are the hole it is recorded in Table 5. In the other section, different high voltages are applied between the two electric connection skeletons 1, so as to test the voltage resistance of the insulating protective layer 6 between the two electric connection skeletons 1. The breakdown voltage of the insulating protective layer lower than 2.1 KV is unqualified and is recorded in Table 5.

**Table 5: Influence of thickness H of insulating protective layer 6 between two electric connection skeletons 1 on cancellation of magnetic fields in case of the overlapping area of two stacked electric connection skeletons 1 being 100%**

| Thickness of insulating protective layer 6 between two electric connection skeletons 1 (H) | Magnetic field cancellation percent | | | | | Whether there is a hole | Average value of breakdown voltage (KV) |
|---|---|---|---|---|---|---|---|
| | First sample | Second sample | Third sample | Fourth sample | Fifth sample | | |
| 30cm | 0.0% | 0.0% | 0.0% | 0.0% | 0.0% | No | 4.63 |
| 29cm | 11.0% | 11.1% | 11.3% | 10.9% | 11.0% | No | 4.51 |
| 28cm | 15.2% | 20.7% | 25.2% | 25.4% | 24.6% | No | 4.39 |
| 27cm | 30.5% | 30.3% | 30.2% | 30.7% | 30.3% | No | 4.27 |
| 25cm | 40.6% | 42.1% | 45.1% | 41.7% | 40.3% | No | 4.16 |
| 23cm | 51.4% | 50.2% | 52.2% | 53.3% | 51.2% | No | 3.94 |
| 21cm | 59.3% | 50.1% | 58.6% | 59.3% | 61.2% | No | 3.82 |
| 19cm | 70.4% | 60.4% | 65.1% | 68.3% | 70.2% | No | 3.69 |
| 17cm | 75.9% | 76.3% | 77.1% | 75.9% | 78.2% | No | 3.57 |
| 15cm | 80.4% | 81.1% | 79.1% | 80.3% | 80.2% | No | 3.46 |
| 13cm | 85.6% | 86.7% | 89.4% | 84.8% | 81.9% | No | 3.35 |
| 11cm | 90.8% | 89.0% | 91.2% | 90.3% | 91.5% | No | 3.24 |
| 9cm | 90.8% | 91.0% | 93.0% | 93.1% | 92.9% | No | 3.12 |
| 7cm | 99.9% | 100.0% | 100.0% | 100.0% | 100.0% | No | 2.96 |
| 5cm | 100.0% | 99.80% | 100.0% | 100.0% | 99.7% | No | 2.84 |
| 3cm | 100.0% | 100.0% | 100.0% | 99.9% | 100.0% | No | 2.73 |
| 1cm | 100.0% | 99.9% | 100.0% | 99.9% | 100.0% | No | 2.61 |
| 0.5cm | 99.8% | 99.9% | 100.0% | 99.9% | 100.0% | No | 2.48 |
| 0.15cm | 99.8% | 99.9% | 100.0% | 99.9% | 99.8% | No | 2.35 |
| 0.1cm | 99.7% | 99.8% | 100.0% | 99.8% | 99.9% | No | 2.21 |
| 0.05cm | 99.8% | 99.9% | 100.0% | 99.9% | 100.0% | Yes | 1.92 |

In this embodiment, the overlapping area means the percent of the overlapping area of the two electric connection skeletons 1 in the stacking direction to the area of one electric connection skeleton 1.

It can be seen from Table 5 that when the overlapping area of the two electric connection skeletons 1 in the stacking direction are 100% and the thickness H of the insulating protective layer 6 between the two electric connection skeletons 1 is less than or equal to 27 cm, the magnetic field cancellation percent is qualified, and a certain effect is achieved for electromagnetic interference prevention.

Exemplarily, it can also be seen from Table 5 that when the thickness of the insulating protective layer 6 between the two electric connection skeletons 1 is less than or equal to 7 cm, the magnetic field cancellation percent is further obviously increased, that is, when the thickness of the insulating protective layer 6 is less than or equal to 7 cm, the very high cancellation effect can be achieved for the magnetic fields. Therefore, the thickness H of the insulating protective layer 6 between the two electric connection skeletons 1 is further set to be less than or equal to 7 cm.

Meanwhile, during actual processing, when the thickness of the insulating protective layer 6 between the two electric connection skeletons 1 is less than or equal to 0.1 cm, the distance between the two electric connection skeletons 1 is too short, and the insulating protective layer 6 between the two electric connection skeletons 1 cannot be injection-molded into a narrow gap, so that there is a hole in the insulating protective layer 6 between the two electric connection skeletons 1. It also makes the breakdown voltage of the insulating protective layer 6 between the two electric connection skeletons 1 be lower than 2.1 KV, so that it is unqualified when the thickness of the insulating protective layer 6 between the two electric connection skeletons 1 is less than 0.1 cm. However, when the thickness of the insulating protective layer 6 between the two electric connection skeletons 1 is increased to 0.15 cm, the breakdown voltage can be remarkably increased to 2.35 KV, during actual production, the thickness of 0.15 cm can improve the smoothness of the inj ection-molding operation, and the hole can be almost eliminated. Therefore, for the inventor, the thickness of the insulating protective layer 6 is further exemplarily 0.15 cm to 7 cm.

In an embodiment of the multi-core electric connector assembly according to the present disclosure, the insulating protective layers 6 are arranged between the electric connection skeletons 1 and on the periphery of the electric connection skeletons in an injection molding manner.

During specific implementation, the insulating protective layers 6 are arranged between the twisted electric connection skeletons 1 and on the periphery of the electric connection skeletons, burning accidents caused by short circuiting between the two electric connection skeletons 1 can be prevented, and the electric connection skeletons 1 in an electrified state are isolated from the outside, thereby preventing people from getting an electric shock and injured.

In an embodiment of the multi-core electric connector assembly according to the present disclosure, as shown in FIG. 12, a periphery of the insulating protective layer 6 is sleeved with a shielding layer 9, and the shielding layer 9 is one of or a combination of a metal with a shielding effect and a composite material of the metal, and a plastic with a shielding effect or a rubber with a shielding effect or a textile with a shielding effect.

During specific implementation, through arrangement of the shielding layer 9, electromagnetic waves generated by the electric connection skeletons 1 during use can be shielded, thereby preventing the electric connection skeletons 1 from interfering with other instruments and devices during use. The shielding layer 9 can reduce the interference of electromagnetic radiation generated by the electric connection skeletons 1 on other electric devices in the vehicle, and the shielding layer 9 is made of a conductor and need to be grounded, so that the insulating protective layer is arranged between the shielding layer 9 and the electric connection skeleton 1 to prevent them from making contact with each other.

Further, as shown in FIG. 12, the outer shell 3 is internally provided with an inner shielding shell 10 with a shielding effect, the inner shielding shell 10 is electrically connected to the shielding layer 9, and an inner wall of the inner shielding shell 10 is provided with the fixing member 5.

During specific implementation, through arrangement of the inner shielding shell 10, electromagnetic radiation or electromagnetic wave interference of the connection terminal 4 in an electrified state can be shielded, thereby preventing the condition that electric devices cannot operate normally due to electromagnetic interference.

Further, impedance between the inner shielding shell 10 and the shielding layer 9 is less than 80 mΩ.

In order to verify the influence of an impedance value between the shielding layer 9 and the inner shielding shell 10 on the shielding effect, the inventor uses the electric connection skeletons 1 with the same specification, connectors 2 with the same specification, inner shielding shells 10 with the same specification and connection terminals 4 with the same specification, and different impedance between the shielding layers 9 and the inner shielding shells 10 to produce a series of samples, the shielding effects are tested respectively, and experimental results are as shown in Table 6 below. In this embodiment, the shielding property value greater than 40 dB is an ideal value.

A test method for the shielding property value is as follows: a tester outputting a signal value (which is a test value 2) to the electric connection skeleton 1, arranging a detector on an outer side of the shielding layer 9, and the detector detecting a signal value (which is a test value 1). Shielding property value equals test value 2 minus test value 1 (shielding property value = test value 2 - test value 1).

**Table 6: Influence of impedance between shielding layer 9 and inner shielding shell 10 on shielding property**

| Test parameter | Impedance between shielding layer 912 and shielding device 6 (mΩ) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding property value (dB) | 75 | 71 | 69 | 65 | 61 | 57 | 51 | 46 | 42 | 35 | 28 |

It can be seen from Table 6 that when the impedance value between the shielding layer 9 and the inner shielding shell 10 is greater than 80 mΩ, the shielding property value is less than 40 dB and does not meet the requirement of the ideal value; and when the impedance value between the shielding layer 9 and the inner shielding shell 10 is less than 80 mΩ, the shielding property value meets the requirement of the ideal value and tends to be better. Therefore, the inventor sets the impedance between the shielding layer 9 and the inner shielding shell 10 to be less than 80 mΩ.

Further, transfer impedance of the inner shielding shell 10 is less than 100 mΩ.

In order to verify the influence of the inner shielding shells 10 with different transfer impedance values on the shielding effect, the inventor uses the electric connection skeletons 1 with the same specification, connectors 2 with the same specification and connection terminals 4 with the same specification and the inner shielding shells 10 with the different transfer impedance values to produce a series of samples, the shielding effects are tested respectively, and experimental results are as shown in Table 7 below. In this embodiment, the shielding property value greater than 40 dB is an ideal value.

A test method for the shielding property value is as follows: a tester outputting a signal value (which is a test value 2) to the electric connection skeleton 1, arranging a detector on an outer side of the inner shielding shell 10, and the detector detecting a signal value (which is a test value 1). Shielding property value equals test value 2 minus test value 1 (shielding property value = test value 2 - test value 1).

**Table 7: Influence of transfer impedance of inner shielding shell 10 on shielding property**

| Test parameter | Transfer impedance of inner shielding shell 10 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding property value (dB) | 79 | 76 | 73 | 67 | 64 | 58 | 54 | 45 | 41 | 29 | 27 |

It can be seen from Table 7 that when the transfer impedance value of the inner shielding shell 10 is greater than 100 mΩ, the shielding property value of the inner shielding shell 10 is less than 40 dB and does not meet the requirement of the ideal value; and when the transfer impedance value of the inner shielding shell 10 is less than 100 mΩ, the shielding property value of the inner shielding shell 10 meets the requirement of the ideal value and tends to be better. Therefore, the inventor sets the transfer impedance of the inner shielding shell 10 to be less than 100 mΩ.

Further, transfer impedance of the shielding layer 9 is less than 100 mΩ.

In order to verify the influence of the shielding layers 9 with different transfer impedance values on the shielding effect, the inventor uses the electric connection skeletons 1 with the same specification, connectors 2 with the same specification and connection terminals 4 with the same specification and the inner shielding shells 10 with the different transfer impedance values to produce a series of samples, the shielding effects are tested respectively, and experimental results are as shown in Table 8 below. In this embodiment, the shielding property value greater than 40 dB is an ideal value.

A test method for the shielding property value is as follows: a tester outputting a signal value (which is a test value 2) to the electric connection skeleton 1, arranging a detector on an outer side of the inner shielding shell 10, and the detector detecting a signal value (which is a test value 1). Shielding property value equals test value 2 minus test value 1 (shielding property value = test value 2 - test value 1).

**Table 8: Influence of transfer impedance of inner shielding shell 10 on shielding property**

| Test parameter | Transfer impedance of inner shielding shell 10 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding property value (dB) | 80 | 78 | 74 | 66 | 63 | 61 | 55 | 46 | 40 | 28 | 25 |

It can be seen from Table 8 that when the transfer impedance value of the shielding layer 9 is greater than 100 mΩ, the shielding property value of the shielding layer 9 is less than 40 dB and does not meet the requirement of the ideal value; and when the transfer impedance value of the shielding layer 9 is less than 100 mΩ, the shielding property value of the shielding layer 9 meets the requirement of the ideal value and tends to be better. Therefore, the inventor sets the transfer impedance of the inner shielding shell 10 to be less than 100 mΩ.

Further, a periphery of the shielding layer 9 is further sleeved with a sheath layer 11. The shielding layer 9 can be protected during use of the electric connection skeleton 1, so that the condition that the shielding properties of the shielding layer 9 is affected due to damage of the shielding layer 9 due to external forces is avoided; meanwhile, the vortex current in the shielding layer 9 is prevented from being conducted by means of the outside, thereby achieving the effect of isolating the shielding layer 9 from the outside, thereby prolonging the service life of the multi-core electric connector assembly.

Further, a part of an inner surface of the outer shell 3 is connected to a part of an outer surface of the sheath layer 11. The insulation arrangement between the connector and the electric connection skeleton 1 can be ensured, thereby preventing casualties due to electric shocks.

Further, one of the connectors 2 is a charging socket. With the popularization of new energy automotive, devices and facilities for charging the new energy automotive are also developed. Rechargeable batteries of the new energy automotive have the requirement for fast charge, so that a charging socket assembly is needed. In the present disclosure, one of the connectors 2 is the charging socket and is connected to a charging gun, and the connector 2 at the other end is a high-voltage connector and is connected to the rechargeable batteries, thereby achieving the purpose of charging the rechargeable batteries.

A vehicle in the present disclosure includes the multi-core electric connector assembly.

Although some specific embodiments of the present disclosure are illustrated in detail by means of examples, those skilled in the art should understand that the above examples are only for the purpose of illustration, and are not intended to limit the scope of the present disclosure. Those skilled in the art should understand that the above embodiments can be amended without departing from the scope and spirit of the present disclosure. The scope of the present disclosure is defined by the appended claims.

## Claims

1. A multi-core electric connector assembly, comprising at least two electric connection skeletons and connectors arranged at two ends of the electric connection skeleton, wherein the connector comprises an outer shell and a connection terminal, at least one end of the electric connection skeleton is connected to the connection terminal, the connection terminal is arranged on the connector, and insulating protective layers are arranged between the electric connection skeletons and on a periphery of the electric connection skeletons.

2. The multi-core electric connector assembly according to claim 1, wherein a ratio of a distance between the electric connection skeletons to the thickness or diameter of the electric connection skeleton is 2% to 86%.

3. The multi-core electric connector assembly according to claim 1, wherein the electric connection skeleton comprises at least one bent portion.

4. The multi-core electric connector assembly according to claim 1, wherein the connector and the electric connection skeleton are integrally formed.

5. The multi-core electric connector assembly according to claim 1, wherein at least a portion of the electric connection skeleton is flexible.

6. The multi-core electric connector assembly according to claim 1, wherein the cross sectional area of the electric connection skeleton is 3.5 mm² to 240 mm².

7. The multi-core electric connector assembly according to claim 1, wherein a cross section of the electric connection skeleton is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

8. The multi-core electric connector assembly according to claim 1, wherein a shape of a cross section of the electric connection skeleton is in a polygonal shape, and all corners of the polygonal shape are chamfered or rounded.

9. The multi-core electric connector assembly according to claim 1, wherein the electric connection skeleton is a rigid body, and the tensile strength of the electric connection skeleton is higher than 75 MPa.

10. The multi-core electric connector assembly according to claim 1, wherein a material of the connection terminal contains copper or a copper alloy, a material of the electric connection skeleton contains aluminum or an aluminum alloy, and the electric connection skeleton is electrically connected to the connection terminal in a welding or crimping manner.

11. The multi-core electric connector assembly according to claim 10, wherein the welding manner comprises one or more selected from a resistance welding manner, a friction welding manner, an ultrasonic welding manner, an arc welding manner, a laser welding manner, an electron beam welding manner, a pressure diffusion welding manner, a magnetic induction welding manner and a crimping manner.

12. The multi-core electric connector assembly according to claim 1, wherein a connection manner for the connection terminal and the electric connection skeleton comprises one or more selected from a threaded connection manner, a snap-fitting manner and a splicing manner.

13. The multi-core electric connector assembly according to claim 12, wherein the connection terminal is provided with a through hole or a threaded hole, the electric connection skeleton is provided with a threaded hole or a through hole, and the through hole and/or the threaded hole are connected by means of bolt structure.

14. The multi-core electric connector assembly according to claim 13, wherein the connection terminal is arranged on the connector by means of a fixing member.

15. The multi-core electric connector assembly according to claim 14, wherein the bolt structure is provided with an anti-loosening member, the anti-loosening member is sleeved or snap-fitted between the bolt structure and the fixing member, and the anti-loosening member prevents the bolt structure from loosening.

16. The multi-core electric connector assembly according to claim 14, wherein the fixing member is arranged on an inner wall of the outer shell, an inner wall of the fixing member is provided with a groove or a boss, a periphery of an end portion of the connection terminal is provided with a boss or a groove, and the boss is snap-fitted with the groove.

17. The multi-core electric connector assembly according to claim 1, wherein when a cross section of the electric connection skeleton is in a rectangular shape, the electric connection skeletons are arranged inside the insulating protective layer in an up-down stacked manner.

18. The multi-core electric connector assembly according to claim 17, wherein the electric connection skeletons are mirrorings of each other.

19. The multi-core electric connector assembly according to claim 1, wherein an overlapping area of the electric connection skeletons in a stacking direction are 13% to 100%.

20. The multi-core electric connector assembly according to claim 1, wherein when a cross section of the electric connection skeleton is in a shape apart from a rectangular shape, the electric connection skeletons are arranged inside the insulating protective layer in parallel in an axial direction.

21. The multi-core electric connector assembly according to claim 1, wherein when a cross section of the electric connection skeleton is in a shape apart from a rectangular shape, the electric connection skeletons are arranged inside the insulating protective layers in a mutually twisted manner in an axial direction.

22. The multi-core electric connector assembly according to claim 21, wherein a ratio of the twist length of mutual twisting of the electric connection skeletons to the maximum outer diameter of the electric connection skeleton is less than or equal to 15.

23. The multi-core electric connector assembly according to claim 17, 20 or 21, wherein a minimum thickness of the insulating protective layer between the stacked electric connection skeletons is 0.1 cm to 27 cm.

24. The multi-core electric connector assembly according to claim 23, wherein a minimum thickness of the insulating protective layer between the stacked electric connection skeletons is 0.15 cm to 7 cm.

25. The multi-core electric connector assembly according to claim 1, wherein the insulating protective layers are arranged between the electric connection skeletons and on the periphery of the electric connection skeletons in an injection molding manner.

26. The multi-core electric connector assembly according to claim 14, wherein a periphery of the insulating protective layer is sleeved with a shielding layer, and the shielding layer is one of or a combination of a metal with a shielding effect and a composite material of the metal, and a plastic with a shielding effect or a rubber with a shielding effect or a textile with a shielding effect.

27. The multi-core electric connector assembly according to claim 26, wherein the outer shell is internally provided with an inner shielding shell with a shielding effect, the inner shielding shell is electrically connected to the shielding layer, and an inner wall of the inner shielding shell is provided with the fixing member.

28. The multi-core electric connector assembly according to claim 27, wherein an impedance between the inner shielding shell and the shielding layer is less than 80 mΩ.

29. The multi-core electric connector assembly according to claim 27, wherein a transfer impedance of the inner shielding shell is less than 100 mΩ.

30. The multi-core electric connector assembly according to claim 27, wherein a transfer impedance of the shielding layer is less than 100 mΩ.

31. The multi-core electric connector assembly according to claim 26, wherein a periphery of the shielding layer is further sleeved with a sheath layer.

32. The multi-core electric connector assembly according to claim 31, wherein a part of an inner surface of the outer shell is connected to a part of an outer surface of the sheath layer.

33. The multi-core electric connector assembly according to claim 1, wherein one of the connectors is a charging socket.

34. A vehicle, comprising the multi-core electric connector assembly according to any one of claims 1 to 33.
